# EUROPÄISCHE PATENTSCHRIFT

(11) **EP 3 145 736 B1**
(45) Veröffentlichungstag und Bekanntmachung des Hinweises auf die Patenterteilung: **23.12.2020**
(21) Anmeldenummer: 14726521.9
(22) Anmeldetag: 22.05.2014
(51) Int. Cl.: B60G 17/015, B60G 17/016, B60G 17/018, B60G 17/052

(54) **VERFAHREN ZUR TRAKTIONSREGELUNG EINES PNEUMATISCH GEFEDERTEN FAHRZEUGS UND LUFTFEDERUNGSSYSTEM ZUR DURCHFÜHRUNG DES VERFAHRENS**
METHOD TO CONTROL THE TRACTION OF A PNEUMATICALLY SUSPENDED VEHICLE AND PNEUMATIC SPRING SYSTEM TO IMPLEMENT THIS METHOD
MÉTHODE DE CONTRÔLE DE LA TRACTION D'UN VEHICULE ET SUSPENSION D'AIR PNEUMATIQUE POUR IMPLÉMENTER CETTE MÉTHODE

(43) Veröffentlichungstag der Anmeldung: 29.03.2017
(73) Patentinhaber: WABCO GmbH, 30453 Hannover (DE)
(72) Erfinder: LENTZ, Uwe, 31535 Neustadt (DE)
(74) Vertreter: Lauerwald, Jörg
(86) Internationale Anmeldenummer: PCT/EP2014/001378
(87) Internationale Veröffentlichungsnummer: WO 2015/176732

(56) Entgegenhaltungen:
- EP-A1- 0 416 310
- EP-A2- 0 372 218
- WO-A1-00/00360
- DE-A1- 10 354 289
- DE-A1- 19 929 221
- DE-A1-102004 010 548
- DE-A1-102004 010 561
- DE-A1-102010 053 264
- DE-T2- 60 314 533
- JP-A- H05 169 956
- JP-A- H08 300 929
- JP-A- H09 109 645
- US-A1- 2002 074 746
- US-A1- 2008 269 986

## Beschreibung

Die Erfindung betrifft ein Luftfederungssystem zur Traktionsregelung eines pneumatisch gefederten Fahrzeugs mit wenigstens einer vorderen Lenkachse, wenigstens einer hinteren Antriebsachse und einer Schleppachse vor oder hinter der Antriebsachse.

In der EP 0 411 352 B1 ist eine Achslast-Steuervorrichtung beschrieben, die als Anfahrhilfe für luftgefederte Mehrachsfahrzeuge dient, bei denen an den Achsen über Ventilmittel mit Druckluft versorgbare Luftfederbälge vorgesehen sind. Neben zumindest einer Antriebsachse ist zumindest eine anhebbare Zusatzachse vorhanden, die als Liftachse bezeichnet wird, oder es ist zumindest eine entlastbare Zusatzachse in Form einer Schleppachse vorhanden, die vor oder hinter der Antriebsachse angeordnet ist. Zur Aktivierung der Anfahrhilfe werden die Luftfederbälge der Zusatzachse entlüftet, und bei Bedarf wird die Liftachse zusätzlich über eine Liftvorrichtung angehoben, wodurch die dabei frei werdende Achslast auf die Antriebsachse übertragen wird, um so die Achslast der Antriebsachse zu erhöhen. Bei Erreichen der maximalen Achslast auf der Antriebsachse wird über einen mit einem Luftfederbalg der Antriebsachse verbundenen Druckschalter der Stromkreis zu den die Achslastverlagerung bewirkenden Magnetventilen unterbrochen. Ein weiterer Anstieg der Achslast auf der Antriebsachse wird dadurch vermieden, die erreichte Achslastverlagerung wird konstant gehalten, und damit wird die gesetzlich zugelassene Belastung der Antriebsachse ausgenutzt. Als Maß für die Achslast wird der Druck in allen Luftfederbalgen der Antriebsachse verwendet.

In der DE 10 2004 010 548 A1 ist eine Fahrzeug-Anfahrhilfe zur Traktionserhöhung bei geringem Reibwert an einem Fahrzeug mit einer entlastbaren Zusatzachse offenbart, bei der die Achslastverlagerung auf der Basis von aktuellen Achslast-Gewichtskräften an diesen Achsen durchgeführt wird. Dadurch wird die Abhängigkeit der Anfahrhilfen-Traktionserhöhung von der Niveauhöhe des Fahrzeugs beseitigt, und es wird eine sich üblicherweise mit der Niveauhöhe ändernde Hub-/Tragkraft-Charakteristik von Luftfederbälgen bei der Achslastverlagerung berücksichtigt. Hierdurch soll erreicht werden, dass die Anfahrhilfe bei jeder Niveauhöhe die gesetzlich zulässigen Vorgaben erfüllt.

Sofern eine Achslastverteilung zwischen der Antriebsachse und der Schleppachse während des gesamten Fahrbetriebs in der Weise durchgeführt wird, dass die Antriebsachse immer zu 100% ihrer gesetzlich vorgeschriebenen maximalen Belastbarkeit auch tatsächlich belastet wird, so wird ein Regelmodus durchgeführt, welcher unter dem Begriff "Optimale Traktion" bekannt ist. Dieser Regelmodus lässt sich als Steuerbefehl vom Fahrzeugführer manuell in eine Achslast-Steuervorrichtung eingeben.

Bei Fahrzeugen, die mit einer Regelvorrichtung gemäß der EP 0 411 352 B1 und/oder einer Regelvorrichtung zur Durchführung des Regelmodus "Optimale Traktion" ausgestattet sind, können sowohl alle Achsen als auch nur die Antriebsachse und die entlastbare Zusatzachse in der Ausführung als Schleppachse zusätzlich mit einer elektronischen Niveauregeleinheit ausgerüstet sein. In diesem Fall wird das Luftvolumen in den Luftfederbälgen dieser Achsen mittels der elektronischen Niveauregeleinheit und von dieser gesteuerter Ventilmittel derart eingeregelt, dass ein vorgegebenes Soll-Niveau zwischen dem Aufbau und den Achsen erreicht wird. Ist die entlastbare Zusatzachse des Fahrzeugs, beispielsweise bei starker Beladung, zur Tragkraftunterstützung aktiviert, dann werden ihre Luftfederbälge mit den Antriebsachsen-Luftfederbälgen über die Niveauregel-Steuereinheit zur Höhenangleichung ebenfalls belüftet oder entlüftet, wobei die Drücke in den Luftfederbälgen der entlastbaren Zusatzachse und den Luftfederbälgen der Antriebsachse beispielsweise auf ein bestimmtes Druckverhältnis, das als "parametriertes Druckverhältnis" bezeichnet wird, eingeregelt werden können, wofür mindestens je ein Drucksensor an den Luftfederbälgen der entlastbaren Zusatzachse und den Luftfederbälgen der Antriebsachse erforderlich ist. Hierfür gibt der Fahrzeugführer einen Steuerbefehl mit der Bezeichnung "Druckverhältnisregelung" in eine entsprechende Achslast-Steuervorrichtung ein.

Unabhängig von den beschrieben Anfahrhilfen gemäß der EP 0 411 352 B1 und der DE 10 2004 010 548 A1 betrifft die Erfindung das Gebiet der Druckregelung in den Luftfederbälgen einer Schleppachse für den normalen Fahrbetrieb eines Fahrzeugs, und zwar in der Art, dass die gesetzlich maximale Belastung der hinterer Antriebsachse des Fahrzeugs sowohl bei maximaler Belastung als auch bei einer Leerfahrt soweit wie möglich ausgenutzt, jedoch nicht überschritten wird.

Aus der JP H09 109 645 A ist ein Verfahren und eine Vorrichtung bekannt, mittels denen bei einem luftgefederten Fahrzeug mit zwei Hinterachsen eine Verteilung der Achslast zwischen einer antreibbaren Hinterachse und eine geschleppten Hinterachse erfolgen kann. Die Lastverteilung erfolgt in Abhängigkeit von der Fahrgeschwindigkeit und von einer maximal zulässigen Last auf der antreibbaren Hinterachse.

Schließlich ist aus der EP 0 372 218 A2 eine Vorrichtung zur Regelung einer druckluftgestützten Fahrzeugfederung bekannt, bei der an einer Fahrzeugachse einem linksseitigen Luftfederbalg und einem rechtsseitigen Luftfederbalg jeweils ein Drucksensor zugeordnet ist, welche deren Messwerte an eine Steuerungseinrichtung leiten. Auf der Grundlage unter anderem dieser Druckmesswerte sind von der Steuerungseinrichtung elektromagnetische Schaltventile betätigbar, mittels denen die Luftfederbälge geregelt befüllt oder entleert werden.

Vor diesem Hintergrund liegt der Erfindung die Aufgabe zugrunde, ausgehend von der JP H09 109 645 A für ein Fahrzeug mit einer hinteren Antriebsachse und einer Schleppachse ein Luftfedersystem vorzustellen, mit dem die Lastverteilung zwischen der hinteren Antriebsachse und der Schleppachse insbesondere bei für eine Leerfahrt besser als bisher einstellbar ist.

Gelöst wird diese Aufgabe durch ein Luftfederungssystem mit den Merkmalen des Anspruchs 1. Vorteilhafte Weiterbildungen sind in den abhängigen Ansprüchen definiert.

Demnach betrifft die Erfindung ein Luftfederungssystem für ein Fahrzeug mit wenigstens einer vorderen Lenkachse, wenigstens einer hinteren Antriebsachse und einer Schleppachse vor oder hinter der Antriebsachse, aufweisend eine elektronische Steuer- und Regeleinheit, eine durch einen Fahrzeugführer betätigbare, mit der elektronischen Steuer- und Regeleinheit verbundene Bedieneinheit, mehrere mit der elektronischen Steuer- und Regeleinheit verbundene Schaltventile, und je einen mit der elektronischen Steuer- und Regeleinheit verbundenen Drucksensor zur Messung der Drücke in den Tragbälgen der wenigstens einen Antriebsachse und der Schleppachse, wobei die elektronische Steuer- und Regeleinheit dazu eingerichtet ist:
- in dem Regelmodus "Druckverhältnisregelung" anhand der aktuellen Tragbalgdrücke zu prüfen, ob ein Entlasten der Schleppachse möglich ist, ohne dadurch die wenigstens eine Antriebsachse zu überlasten,
- wenn dies der Fall ist, automatisch in einen Regelmodus "Optimale Traktion" umzuschalten, und
- in dem Regelmodus "Optimale Traktion" den Druck in den Tragbälgen der wenigstens einen Antriebsachse durch Ansteuern der Schaltventile zu erhöhten und den Druck in den Tragbälgen der Schleppachse bis auf einen parametrierten Restdruck herabzusetzen, um dadurch eine Lastverlagerung auf die wenigstens eine Antriebsachse durch Entlasten der Schleppachse zu bewirken, ohne die maximal zulässige Achslast der wenigstens einen Antriebsachse zu überschreiten, und ohne die minimal zulässige Achslast der Schleppachse zu unterschreiten.

Gemäß der Erfindung ist dieses Luftfederungssystem gekennzeichnet durch jeweils einen mit der elektronischen Steuer- und Regeleinheit verbundenen Drucksensor an jedem der Tragbälge der wenigstens einen Antriebsachse und der Schleppachse, sowie durch ein zusammen mit den Schaltventilen in einem Ventilblock angeordnetes elektromagnetisches 3/2-Wegeventil, dessen Eingang mit einer Druckluftquelle verbunden ist, dessen erster Ausgang mit einer Entlüftungseinrichtung verbunden ist, und dessen zweiter Ausgang mit den Eingängen von vier elektromagnetischen 2/2-Wegeventilen verbunden ist, von denen die Ausgänge eines ersten beziehungsweise eines zweiten elektromagnetischen 2/2-Wegeventils mit einem ersten Tragbalg beziehungsweise einem zweiten Tragbalg der wenigstens einen Antriebsachse verbunden sind, und die Ausgänge von einem dritten beziehungsweise vierten elektromagnetischen 2/2-Wegeventil mit einem dritten Tragbalg beziehungsweise mit einem vierten Tragbalg der Schleppachse verbunden sind.

Bei dieser Ausführungsform ist die elektronische Steuer- und Regeleinheit dazu eingerichtet, im Regelmodus "Optimale Traktion" das Entlasten der Schleppachse und das Belasten der wenigstens einen Antriebsachse zu bewirken, indem zunächst das elektromagnetische 3/2-Wegeventil auf Durchlass für Druckluft von dem ersten bis vierten elektromagnetischen 2/2-Wegeventil zu der Entlüftungsvorrichtung geschaltet wird und gleichzeitig das dritte und vierte elektromagnetische 2/2-Wegeventil der Schleppachse auf Durchlass geschaltet werden, während das erste und zweite elektromagnetische 2/2-Wegeventil der wenigstens einen Antriebsachse in ihrer Sperrstellung gehalten werden, um die Tragbälge der Schleppachse auf bis auf einen Restdruck zu entlüften, sowie dann das dritte und vierte elektromagnetische 2/2-Wegeventil der Schleppachse wieder in deren Sperrstellung zu schalten, und indem danach das elektromagnetische 3/2-Wegventil wieder auf Durchlass für Druckluft von der Druckluftquelle zu den ersten bis vierten elektromagnetischen 2/2-Wegeventilen geschaltet wird sowie die ersten und zweiten elektromagnetischen 2/2-Wegeventile der wenigstens einen Antriebsachse auf Durchlass geschaltet werden, um den Luftdruck in den ersten beiden Tragbälgen der wenigstens einen Antriebsachse so weit einzuregeln, dass die maximal zulässige Achslast der wenigstens einen Antriebsachse nicht überschritten sowie die minimal zulässige Achslast der Schleppachse nicht unterschritten wird und das Fahrniveau erreicht ist.

Bei den vorstehend definierten Ausführungsformen des erfindungsgemäßen Luftfederungssystems kann die elektronische Steuer- und Regeleinheit dazu eingerichtet sein, die wenigstens eine Antriebsachse auf Überschreiten der zulässigen Achslast anhand der aktuellen Tragbalgdrücke zu überwachen, zudem automatisch von dem Regelmodus "Optimale Traktion" auf den Regelmodus "Druckverhältnisregelung" zurückzuschalten, sofern die zulässige Achslast der wenigstens einen Antriebsachse überschritten ist, und außerdem das Belasten der Schleppachse sowie die Lastverlagerung auf die Schleppachse und das Einhalten der zulässigen Achslast der wenigstens einen Antriebsachse zu steuern.

Gemäß einer anderen Ausführungsform kann die Bedieneinheit dazu eingerichtet sein, einen durch den Fahrzeugführer bei Beginn oder während einer Leerfahrt eingegebenen Steuerbefehl "Schleppachse entlasten" an die elektronische Steuer- und Regeleinheit zu leiten, wodurch die elektronische Steuer- und Regeleinheit dazu veranlasst wird, die Schaltventile des Ventilblocks zur Entlastung der Schleppachse entsprechend anzusteuern.

Eine vollautomatische Arbeitsweise des Luftfederungssystems lässt sich erreichen, wenn die genannte elektronische Steuer- und Regeleinheit dazu eingerichtet ist, anhand der aktuellen Tragbalgdrücke festzustellen, ob eine Leerfahrt vorliegt, und die Schaltventile des Ventilblocks zur Entlastung der Schleppachse entsprechend automatisch anzusteuern.

Die Erfindung wird nachstehend anhand von in der Zeichnung dargestellten Ausführungsbeispielen weiter erläutert. In der Zeichnung zeigt
Fig. 1 eine schematische Draufsicht auf ein Fahrzeug mit einer vorderen Lenkachse, einer hinteren Antriebsachse sowie einer Schleppachse, und
Fig. 2 eine schematische Darstellung eines Schaltplans eines Luftfederungssystems für ein Fahrzeug mit einer Schleppachse.

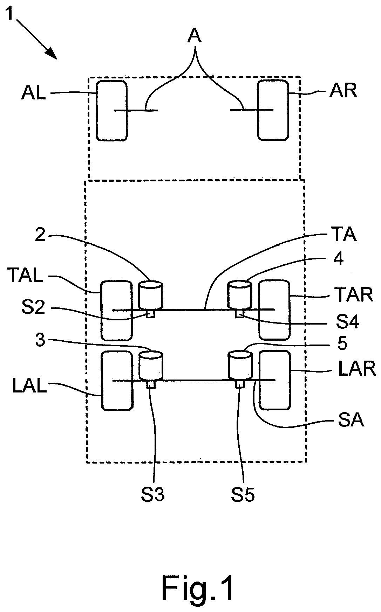

Fig. 1 zeigt in einer Draufsicht eine Prinzipdarstellung eines Fahrzeugs 1 mit einer vorderen gelenkten Lenkachse A sowie einer hinteren Antriebsachse TA und einer antriebslosen Schleppachse SA. Die Last des Fahrzeugs 1 ist unter anderem über einen ersten Tragbalg 2 auf ein linkes Antriebsrad TAL und durch einen zweiten Tragbalg 4 auf ein rechtes Antriebsrad TAR der Antriebsachse TA abgefedert. Am ersten Tragbalg 2 ist ein erster Drucksensor S2 und am zweiten Tragbalg 4 ein zweiter Drucksensor S4 zum Sensieren der Drücke in den Tragbälgen 2, 4 der Antriebsachse TA angeordnet.

In ähnlicher Weise ist die Schleppachse SA durch einen dem linken Rad LAL der Schleppachse SA benachbarten dritten Tragbalg 3 und durch einen dem rechten Rad LAR der Schleppachse SA benachbarten vierten Tragbalg 5 abgefedert. Die Drücke in diesen beiden Tragbälgen 3 und 5 werden durch einen dritten Drucksensor S3 am dritten Tragbalg 3 und einen vierten Drucksensor S5 am vierten Tragbalg 5 sensiert.

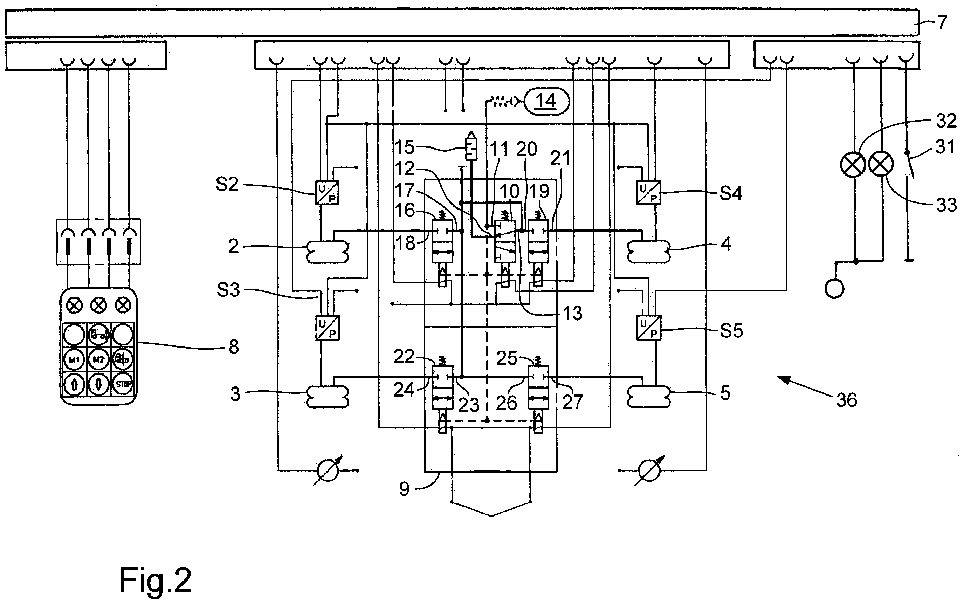

In Fig. 2 ist ein elektronisch gesteuertes Luftfederungssystem 36 für das in Fig. 1 gezeigte Fahrzeug mit einer Antriebsachse TA und einer Schleppachse SA dargestellt. Eine elektronische Steuer- und Regeleinheit 7 ist mit einer von einem Fahrzeugführer betätigbaren Bedieneinheit 8, mit einem Ventilblock 9, mit den schon genannten Drucksensoren S2, S3, S4, S5 an den vier Tragbälgen 2, 3, 4, 5, mit einem Umschalter 31 zur Umschaltung von einem Regelmodus "Druckverhältnisregelung" in einem Regelmodus "Optimale Traktion", mit einer Anzeigeleuchte 32 "Lastverlagerung" und einer Anzeigeleuchte 33 "Sicherheit" verbunden. Die Drucksensoren S2, S4, S3, S5 messen die Drücke in den Tragbälgen 2, 4, 3, 5 und leiten diese über Sensorleitungen an die elektronisehe Steuer- und Regeleinheit 7 weiter. Die Bedieneinheit 8 dient dazu, das Fahrzeugniveau durch den Fahrzeugführer manuell einzustellen.

Der Ventilblock 9 verfügt über ein elektromagnetisches 3/2-Wegeventil 10, dessen Eingang 11 mit einer Druckluftquelle 14 verbunden ist, dessen erster Ausgang 12 mit einer Entlüftungseinrichtung 15 verbunden ist, und dessen zweiter Ausgang 13 mit den Eingängen 17, 20, 23, 26 von vier elektromagnetischen 2/2-Wegeventilen mit den Bezugsziffern 16, 19, 22, 25 verbunden ist. Die Ausgänge 18, 21 des ersten und des zweiten elektromagnetischen 2/2 Wegeventils 16, 19 sind mit dem ersten Tragbalg 2 beziehungsweise mit dem zweiten Tragbalg 4 der Antriebsachse TA verbunden. Die Ausgänge 24, 27 des dritten und vierten elektromagnetischen 2/2-Wegeventils 22, 25 sind mit dem dritten Tragbalg 3 beziehungsweise mit dem vierten Tragbalg 5 der Schleppachse SA verbunden.

Eine in Verbindung mit Luftfederungssystemen bekannte Niveauregeleinrichtung bewirkt über die elektronische Steuer- und Regeleinheit 7, dass das elektromagnetische 3/2-Wegeventil 10 in diejenige Stellung gelangt, in der die Druckluftquelle 14 über den Eingang 11 und dem zweiten Ausgang 13 mit den Eingängen 17, 20, 23, 26 der vier elektromagnetischen 2/2-Wegeventile 16, 19, 22, 25 verbunden ist, wovon die den Tragbälgen zugeordneten elektromagnetischen 2/2-Wegeventile 16, 19, 22, 25 so lange auf Durchlass geschaltet werden und bleiben, bis genügend Druckluft in die Tragbälge 2, 4 der Antriebsachse TA und die Tragbälge 3, 5 der Schleppachse SA gelangt ist, um ein vorgegebenes Soll-Fahrzeugniveau herzustellen und einzuhalten. Diese Niveauregelung ist nicht Bestandteil der vorliegenden Erfindung, so dass die Beschreibung weiterer Einzelheiten unterbleibt.

Die elektronische Steuer- und Regeleinheit 7 ist dazu eingerichtet, in dem Regelmodus "Druckverhältnisregelung" ein parametriertes Druckverhältnis zwischen den beiden Tragbälgen 2, 4 der Antriebsachse TA und den beiden Tragbälgen 3, 5 der Schleppachse SA durch Ansteuern der 2/2-Wegeventile 16, 19, 22, 25 des Ventilblocks 9 aufrechtzuerhalten.

In dem Regelmodus "Optimale Traktion" kann die elektronische Steuer- und Regeleinheit 7 den Druck im ersten und zweiten Tragbalg 2, 4 der Antriebsachse TA durch Ansteuern der 2/2-Wegeventile 16, 19, 22, 25 des Ventilblocks 9 erhöhen sowie den Druck in dem dritten und vierten Tragbalg 3, 5 der Schleppachse SA bis auf eine Restdruckhaltung herabsetzen, um dadurch eine Lastverlagerung auf die Antriebsachse TA durch Entlasten der Schleppachse SA zu bewirken, ohne die maximal zulässige Achslast der Antriebsachse TA zu überschreiben, und ohne die minimal zulässige Achslast der Schleppachse SA zu unterschreiten.

Solange der Regelmodus "Druckverhältnisregelung" wirksam ist, prüft die elektronische Steuer- und Regeleinheit 7 anhand der aktuellen Tragbalgdrücke, ob ein Entlasten der Schleppachse SA möglich ist, ohne dadurch die Antriebsachse TA zu überlasten, und schaltet, sofern dies der Fall ist, automatisch auf den Regelmodus "Optimale Traktion" um.

Im Regelmodus "Optimale Traktion" bewirkt die elektronische Steuer- und Regeleinheit 7 das Entlasten der Schleppachse SA und das Belasten der Antriebsachse TA, indem zunächst das elektromagnetische 3/2-Wegeventil 10 auf Durchlass für die Druckluft aus den vier elektromagnetischen 2/2-Wegeventilen 16, 19, 22, 25 zu der Entlüftungseinrichtung 15 geöffnet wird. Dabei werden aber nur die beiden elektromagnetischen 2/2 Wegeventile der Schleppachse SA, nämlich das dritte und das vierte elektromagnetische 2/2 Wegeventil 22, 25 auf Durchlass geschaltet, während das erste und das zweite elektromagnetische 2/2-Wegeventil 16 und 19 der Antriebsachse TA in ihrer Sperrstellung gehalten werden. Dadurch entlüften die Tragbälge 3, 5 der Schleppachse SA bis zu einem vorgegebenen, parametrierbaren Restdruck. Anschließend werden die beiden
elektromagnetischen 2/2-Wegeventile 22, 25 der Schleppachse SA wieder in ihre Sperrstellung geschaltet. Danach wird das elektromagnetische 3/2-Wegeventil 10 wieder auf Durchlass für die Druckluft von der Druckluftquelle 14 zu den vier elektromagnetischen 2/2-Wegeventilen 16, 19, 22, 25 geschaltet, und die der Antriebsachse TA zugeordneten elektromagnetischen 2/2-Wegeventile 22, 25 werden auf Durchlass geschaltet. Dadurch kann der Luftdruck in den Tragbälgen 2, 4 der Antriebsachse TA so eingeregelt werden, dass die maximal zulässige Achslast der wenigstens einen Antriebsachse TA nicht überschritten und die minimal zulässige Achslast der Schleppachse SA nicht unterschritten wird.

Die parametrierbare Restdruckhaltung in den Tragbälgen 3, 5 der Schleppachse SA ist erforderlich, um die minimal zulässige Achslast der Schleppachse SA einzuhalten, welche notwendig ist, um eine ausreichende Bodenhaftung der Schleppachse SA zu gewährleisten, die für ein sicheres Fahren des Fahrzeugs 1 erforderlich ist.

Die elektronische Steuer- und Regeleinheit 7 ist auch in der Lage, die Antriebsachse TA auf das Überschreiten der zulässigen Achslast anhand der aktuellen Tragbalgdrücke laufend zu überwachen und in den Regelmodus "Druckverhältnisregelung" umzuschalten, sofern die zulässige Achslast der Antriebsachse TA überschritten ist, und das Belasten der Schleppachse SA sowie die Lastverlagerung auf die Schleppachse SA und das Einhalten der zulässigen Achslast der Antriebsachse TA zu steuern. Hierdurch wird erreicht, dass der Fahrzeugführer nicht mehr gehalten ist, aktiv in den Regelmodus "Druckverhältnisregelung" zurückzuschalten, wenn das Fahrzeug 1 nach einer Leerfahrt beladen wird, da die elektronische Steuer- und Regeleinheit 7 mittels der vier Drucksensoren S2, S4 S3, S5 darüber informiert wird, ob die zulässige Achslast der Antriebsachse TA überschritten wird.

Bei der vorgestellten Ausführungsform dient der Umschalter 31 dem Fahrzeugführer dazu, bei Bedarf, also vorzugsweise vor Beginn einer Leerfahrt, manuell von einem voreingestellten Regelmodus "Druckverhältnisregelung" in den Regelmodus "Optimale Traktion" umzuschalten. Dadurch erhält die elektronische Steuer- und Regeleinheit 7 den Steuerbefehl "Schleppachse entlasten", in deren Folge die Steuer- und Regeleinheit 7 die vier 2/2-Wegeventile 16, 19, 22, 25 des Ventilblocks 9 zur Entlastung der Schleppachse SA sowie zur Belastung der Antriebsachse TA ansteuert.

Mit den beschriebenen, elektronisch geregelten Luftfederungssystemen 36 für ein pneumatisch gefedertes Fahrzeug 1 mit wenigstens einer vorderen Lenkachse A, wenigstens einer hinteren Antriebsachse TA und einer Schleppachse SA vor oder hinter der Antriebsachse TA ist es möglich, das Luftfederungssystem 36 so zu regeln, dass, ausgehend von dem Regelmodus "Druckverhältnisregelung" ein Umschalten auf den Regelmodus "Schleppachse entlasten" erfolgt, sofern eine Überprüfung ergibt, ob ein Entlasten der Schleppachse SA möglich ist, ohne dadurch die Antriebsachse TA zu überlasten. Dabei erfolgt ein automatisches Umschalten auf den Regelmodus "Optimale Traktion" dann, wenn das Entlasten der Schleppachse SA möglich ist, sowie dadurch das Entlasten der Schleppachse SA bis auf eine Restdruckhaltung und dadurch die Lastverlagerung auf die Antriebsachse TA bewirkt werden kann.

Diese Vorgehensweise lässt sich automatisieren, wenn, ausgehend vom Regelmodus "Druckverhältnisregelung", laufend geprüft wird, ob ein Entlasten der Schleppachse SA möglich ist, ohne dadurch die Antriebsachse TA zu überlasten. So kann ein automatisches Umschalten vom Regelmodus "Druckverhältnisregelung" über den Regelmodus "Schleppachse entlasten" auf den Regelmodus "Optimale Traktion" erfolgen, sofern die laufende Prüfung der Achslasten ergibt, dass das Entlasten der Schleppachse SA möglich ist, ohne dass dadurch die Antriebsachse TA überlastet wird. Ist diese Randbedingung erfüllt, erfolgt ein automatisches Umschalten auf den Regelmodus "Optimale Traktion".

Zusätzlich ist auch noch ein automatisches Zurückschalten auf den Regelmodus "Druckverhältnisregelung" möglich, sofern die zulässige Achslast der Antriebsachse TA beim laufenden Überwachen der Luftdrücke in den Tragbälgen der Antriebsachse TA als überschritten festgestellt wird. Dadurch erfolgt ein geregeltes Belasten der Schleppachse SA sowie eine geregelte Entlastung der Antriebsachse TA bis unter deren maximale Achslast, wodurch letztlich die zulässige maximale Achslast der Antriebsachse TA eingehalten wird.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung ist somit nicht auf die beschriebenen und beanspruchten Merkmalskombinationen beschränkt. Vielmehr sind alle Merkmalskombinationen als offenbart zu betrachten.

### Bezugzeichenliste

- 1: Fahrzeug
- 2: Erster Tragbalg
- 3: Dritter Tragbalg
- 4: Zweiter Tragbalg
- 5: Vierter Tragbalg
- S2: Erster Drucksensor
- S3: Zweiter Drucksensor
- S4: Dritter Drucksensor
- S5: Vierter Drucksensor
- 7: Elektronische Steuer- und Regeleinheit
- 8: Bedieneinheit
- 9: Ventilblock
- 10: Elektromagnetisches 3/2-Wegeventil
- 11: Eingang des 3/2-Wegeventils
- 12: Erster Ausgang des 3/2-Wegeventils
- 13: Zweiter Ausgang des 3/2-Wegeventils
- 14: Druckluftquelle
- 15: Entlüftungseinrichtung
- 16: Erstes elektromagnetisches 2/2-Wegeventil
- 17: Eingang des 2/2-Wegeventils 16
- 18: Ausgang des 2/2-Wegeventils 16
- 19: Zweites elektromagnetisches 2/2-Wegeventil
- 20: Eingang des 2/2-Wegeventils 19
- 21: Ausgang des 2/2-Wegeventils 19
- 22: Drittes elektromagnetisches 2/2-Wegeventil
- 23: Eingang des 2/2-Wegeventils 22
- 24: Ausgang des 2/2-Wegeventils 22
- 25: Viertes elektromagnetisches 2/2-Wegeventil
- 26: Eingang des 2/2-Wegeventils 25
- 27: Ausgang des 2/2-Wegeventils 25
- 31: Umschalter vom Regelmodus "Druckverhältnisregelung" auf "Optimale Traktion"
- 32: Anzeigeleuchte "Lastverlagerung"
- 33: Anzeigeleuchte "Sicherheit"
- 36: Luftfederungssystem für ein Fahrzeug 1 mit Schleppachse SA
- A: Vordere Lenkachse
- AL: Linkes Vorderrad
- AR: Rechtes Vorderrad
- TA: Hintere Antriebsachse
- TAL: Linkes Antriebsrad
- TAR: Rechtes Antriebsrad
- SA: Schleppachse
- LAL: Linkes Rad der Schleppachse SA
- LAR: Rechtes Rad der Schleppachse SA

## Patentansprüche

1. Luftfederungssystem (36) für ein Fahrzeug (1) mit wenigstens einer vorderen Lenkachse (A), wenigstens einer hinteren Antriebsachse (TA) und einer Schleppachse (SA) vor oder hinter der Antriebsachse (TA), aufweisend eine elektronische Steuer- und Regeleinheit (7), eine durch einen Fahrzeugführer betätigbare, mit der elektronischen Steuer- und Regeleinheit (7) verbundene Bedieneinheit (8), mehrere mit der elektronischen Steuer- und Regeleinheit (7) verbundene-Schaltventile (16, 19, 22, 25), und je einen mit der elektronischen Steuer- und Regeleinheit (7) verbundenen Drucksensor zur Messung der Drücke in den Tragbälgen (2, 4; 3, 5) der wenigstens einen Antriebsachse (TA) und der Schleppachse (SA), wobei die elektronische Steuer- und Regeleinheit (7) dazu eingerichtet ist:
- in einem Regelmodus "Druckverhältnisregelung" anhand der aktuellen Tragbalgdrücke zu prüfen, ob ein Entlasten der Schleppachse (SA) möglich ist, ohne dadurch die wenigstens eine Antriebsachse (TA) zu überlasten,
- wenn dies der Fall ist, automatisch in einen Regelmodus "Optimale Traktion" umzuschalten, und
- in dem Regelmodus "Optimale Traktion" den Druck in den Tragbälgen (2, 4) der wenigstens einen Antriebsachse (TA) durch Ansteuern der Schaltventile zu erhöhen und den Druck in den Tragbälgen (3, 5) der Schleppachse (SA) bis auf einen parametrierten Restdruck herabzusetzen, um dadurch eine Lastverlagerung auf die wenigstens eine Antriebsachse (TA) durch Entlasten der Schleppachse (SA) zu bewirken, ohne die maximal zulässige Achslast der wenigstens einen Antriebsachse (TA) zu überschreiten, und ohne die minimal zulässige Achslast der Schleppachse (SA) zu unterschreiten, **gekennzeichnet durch**
jeweils einen mit der elektronischen Steuer- und Regeleinheit (7) verbundenen Drucksensor (S2, S4; S3, S5) an jedem der Tragbälge (2, 4; 3, 5) der wenigstens einen Antriebsachse (TA) und der Schleppachse (SA), sowie durch ein zusammen mit den Schaltventilen (16, 19, 22, 25) in einem Ventilblock (9) angeordnetes elektromagnetisches 3/2-Wegeventil (10), dessen Eingang (11) mit einer Druckluftquelle (14) verbunden ist, dessen erster Ausgang (12) mit einer Entlüftungseinrichtung (15) verbunden ist, und dessen zweiter Ausgang (13) mit den Eingängen (17, 20, 23, 26) von vier elektromagnetischen 2/2-Wegeventilen (16, 19, 22, 25) verbunden ist, von denen die Ausgänge (18, 21) eines ersten beziehungsweise eines zweiten elektromagnetischen 2/2-Wegeventils (16, 19) mit einem ersten Tragbalg (2) beziehungsweise einem zweiten Tragbalg (4) der wenigstens einen Antriebsachse (TA) verbunden sind, und die Ausgänge (24, 27) von einem dritten beziehungsweise vierten elektromagnetischen 2/2-Wegeventil (22, 25) mit einem dritten Tragbalg (3) beziehungsweise mit einem vierten Tragbalg (5) der Schleppachse (SA) verbunden sind.

2. Luftfederungssystem nach Anspruch 1, **dadurch gekennzeichnet, dass** die elektronische Steuer- und Regeleinheit (7) dazu eingerichtet ist, im Regelmodus "Optimale Traktion" das Entlasten der Schleppachse (SA) und das Belasten der wenigstens einen Antriebsachse (TA) zu bewirken, indem zunächst das elektromagnetische 3/2-Wegeventil (10) auf Durchlass für Druckluft von dem ersten bis vierten elektromagnetischen 2/2-Wegeventil (16, 19, 22, 25) zu der Entlüftungsvorrichtung (15) geschaltet wird und gleichzeitig das dritte und vierte elektromagnetische 2/2-Wegeventil (22, 25) der Schleppachse (SA) auf Durchlass geschaltet werden, während das erste und zweite elektromagnetische 2/2-Wegeventil (16, 19) der wenigstens einen Antriebsachse (TA) in ihrer Sperrstellung gehalten werden, um die Tragbälge (3, 5) der Schleppachse (SA) auf bis auf einen Restdruck zu entlüften, und dann das dritte und vierte elektromagnetische 2/2-Wegeventil (22, 25) der Schleppachse (SA) wieder in deren Sperrstellung zu schalten, und danach das elektromagnetische 3/2-Wegventil (10) wieder auf Durchlass für Druckluft von der Druckluftquelle (14) zu den ersten bis vierten elektromagnetischen 2/2-Wegeventilen (16, 19; 22, 25) geschaltet wird sowie das erste und zweite elektromagnetische 2/2-Wegeventil (16, 19) der wenigstens einen Antriebsachse (TA) auf Durchlass geschaltet werden, um den Luftdruck in den ersten beiden Tragbälgen (2, 4) der wenigstens einen Antriebsachse (TA) so weit einzuregeln, dass die maximal zulässige Achslast der wenigstens einen Antriebsachse (TA) nicht überschritten sowie die minimal zulässige Achslast der Schleppachse (SA) nicht unterschritten wird.

3. Luftfederungssystem nach einem der Ansprüche 1 bis 2, **dadurch gekennzeichnet, dass** die elektronische Steuer- und Regeleinheit (7) dazu eingerichtet ist:
- ein laufendes Überwachen der wenigstens einen Antriebsachse (TA) auf Überschreiten der zulässigen Achslast anhand der aktuellen Tragbalgdrücke vorzunehmen,
- ein automatisches Zurückschalten von dem Regelmodus "Optimale Traktion" in den Regelmodus "Druckverhältnisregelung" vorzunehmen, sofern die zulässige Achslast der wenigstens einen Antriebsachse (TA) überschritten ist, und
- ein Belasten der Schleppachse (SA) sowie eine Lastverlagerung auf die Schleppachse (SA) und ein Einhalten der zulässigen Achslast der wenigstens einen Antriebsachse (TA) zu steuern.

4. Luftfederungssystem nach einem der Ansprüche 1 bis 3, **dadurch gekennzeichnet, dass** die Bedieneinheit (8) dazu eingerichtet ist, einen durch den Fahrzeugführer bei einer Leerfahrt eingegebenen Steuerbefehl "Schleppachse entlasten" an die elektronische Steuer- und Regeleinheit (7) zu leiten, und dass die elektronische Steuer- und Regeleinheit (7) dazu eingerichtet ist, die elektromagnetischen 2/2-Wegeventile (16, 19, 22, 25) des Ventilblocks (9) zur Durchführung dieses Schaltbefehls anzusteuern.

5. Luftfederungssystem nach einem der Ansprüche-1 bis 4, **dadurch gekennzeichnet, dass** die elektronische Steuer- und Regeleinheit (7) dazu eingerichtet ist, anhand der aktuellen Tragbalgdrücke festzustellen, ob eine Leerfahrt vorliegt, und die 2/2-Wegeventile (16, 19, 22, 25) des Ventilblocks (9)) zur Durchführung dieses Schaltbefehls-anzusteuern.

## Claims

1. Air suspension system (36) for a vehicle (1) with at least one front steering axle (A), at least one rear drive axle (TA) and a trailing axle (SA) in front of or behind the drive axle (TA), having an electronic control and regulating unit (7), an operating unit (8) which can be actuated by way of a vehicle driver and is connected to the electronic control and regulating unit (7), a plurality of switching valves (16, 19, 22, 25) which are connected to the electronic control and regulating unit (7), and in each case one pressure sensor which is connected to the electronic control and regulating unit (7) for the measurement of the pressures in the supporting bellows (2, 4; 3, 5) of the at least one drive axle (TA) and the trailing axle (SA), the electronic control and regulating unit (7) being set up:
- to check, in a "pressure ratio regulation" regulating mode, on the basis of the current supporting bellows pressures, whether relieving of the trailing axle (SA) is possible, without overloading the at least one drive axle (TA) as a result,
- if this is the case, to switch over automatically into an "optimum traction" regulating mode, and,
- in the "optimum traction" regulating mode, to increase the pressure in the supporting bellows (2, 4) of the at least one drive axle (TA) by way of actuation of the switching valves, and to lower the pressure in the supporting bellows (3, 5) of the trailing axle (SA) as far as a parameterized residual pressure, in order, as a result, to bring about a load displacement to the at least one drive axle (TA) by way of relieving of the trailing axle (SA), without exceeding the maximum permissible axle load of the at least one drive axle (TA), and without undershooting the minimum permissible axle load of the trailing axle (SA), **characterized by** in each case one pressure sensor (S2, S4; S3, S5), which is connected to the electronic control and regulating unit (7), on each of the supporting bellows (2, 4; 3, 5) of the at least one drive axle (TA) and the trailing axle (SA), and by an electromagnetic 3/2-way valve (10) which is arranged together with the switching valves (16, 19, 22, 25) in a valve block (9), the input (11) of which 3/2-way valve (10) is connected to a compressed air source (14), the first output (12) of which 3/2-way valve (10) is connected to a ventilating device (15), and the second output (13) of which 3/2-way valve (10) is connected to the inputs (17, 20, 23, 26) of four electromagnetic 2/2-way valves (16, 19, 22, 25), of which the outputs (18, 21) of a first and a second electromagnetic 2/2-way valve (16, 19) are connected to a first supporting bellows (2) and a second supporting bellows (4), respectively, of the at least one drive axle (TA), and the outputs (24, 27) of a third and fourth electromagnetic 2/2-way valve (22, 25) are connected to a third supporting bellows (3) and to a fourth supporting bellows (5), respectively, of the trailing axle (SA).

2. Air suspension system according to Claim 1, **characterized in that** the electronic control and regulating unit (7) is set up, in the "optimum traction" regulating mode, to bring about the relieving of the trailing axle (SA) and the loading of the at least one drive axle (TA), by the electromagnetic 3/2-way valve (10) first of all being switched to allow passage for compressed air from the first to fourth electromagnetic 2/2-way valve (16, 19, 22, 25) to the ventilating apparatus (15), and at the same time by the third and fourth electromagnetic 2/2-way valve (22, 25) of the trailing axle (SA) being switched to allow passage, while the first and second electromagnetic 2/2-way valve (16, 19) of the at least one drive axle (TA) are held in their shut-off position, in order to ventilate the supporting bellows (3, 5) of the trailing axle (SA) as far as a residual pressure, and then by switching the third and fourth electromagnetic 2/2-way valve (22, 25) of the trailing axle (SA) back into their shut-off position, and afterwards by switching the electromagnetic 3/2-way valve (10) to allow passage again for compressed air from the compressed air source (14) to the first to fourth electromagnetic 2/2-way valves (16, 19; 22, 25), and by both the first and second electromagnetic 2/2-way valve (16, 19) of the at least one drive axle (TA) being switched to allow passage, in order to adjust the air pressure in the first two supporting bellows (2, 4) of the at least one drive axle (TA) to such an extent that the maximum permissible axle load of the at least one drive axle (TA) is not exceeded and the minimum permissible axle load of the trailing axle (SA) is not undershot.

3. Air suspension system according to either of Claims 1 and 2, **characterized in that** the electronic control and regulating unit (7) is set up:
- to perform continuous monitoring of the at least one drive axle (TA) for exceeding of the permissible axle load on the basis of the current supporting bellows pressures,
- to perform automatic switching back from the "optimum traction" regulating mode into the "pressure ratio regulation" regulating mode, if the permissible axle load of the at least one drive axle (TA) is exceeded, and
- to control loading of the trailing axle (SA) and load displacement to the trailing axle (SA) and maintaining of the permissible axle load of the at least one drive axle (TA).

4. Air suspension system according to one of Claims 1 to 3, **characterized in that** the operating unit (8) is set up to forward a "relieve trailing axle" control command which is input by way of the vehicle driver in the case of an unladen journey to the electronic control and regulating unit (7), and **in that** the electronic control and regulating unit (7) is set up to actuate the electromagnetic 2/2-way valves (16, 19, 22, 25) of the valve block (9) in order to carry out the said switching command.

5. Air suspension system according to one of Claims 1 to 4, **characterized in that** the electronic control and regulating unit (7) is set up to determine whether there is an unladen journey on the basis of the current supporting bellows pressures, and to actuate the 2/2-way valves (16, 19, 22, 25) of the valve block (9) in order to carry out the said switching command.

## Revendications

1. Système de suspension pneumatique (36) destiné à un véhicule (1) comprenant au moins un essieu directeur avant (A), au moins un essieu moteur arrière (TA) et un essieu traîné (SA) devant ou derrière l'essieu moteur (TA), ledit système comportant une unité de commande et de régulation électronique (7), une unité de manœuvre (8) qui peut être actionnée par un conducteur de véhicule et qui est reliée à l'unité de commande et de régulation électronique (7), plusieurs vannes de commutation (16, 19, 22, 25) reliées à l'unité de commande et de régulation électronique (7), et pour chacune d'elles un capteur de pression relié à l'unité de commande et de régulation électronique (7) et destiné à mesurer les pressions dans les soufflets de support (2, 4 ; 3, 5) de l'au moins un essieu moteur (TA) et de l'essieu traîné (SA), l'unité de commande et de régulation électronique (7) étant conçue pour
- vérifier dans un mode de régulation appelé « régulation du rapport des pressions » sur la base des pressions de soufflets de support actuelles s'il est possible de soulager l'essieu traîné (SA) sans surcharger pour cela l'au moins un essieu moteur (TA),
- si c'est le cas, passer automatiquement à un mode de régulation appelé « traction optimale », et
- en mode de régulation appelé « traction optimale », augmenter la pression dans les soufflets de support (2, 4) de l'au moins un essieu moteur (TA) par commande des vannes de commutation et réduire la pression dans les soufflets de support (3, 5) de l'essieu traîné (SA) jusqu'à une pression résiduelle paramétrée afin de générer un déplacement de charge sur l'au moins un essieu moteur (TA) par soulagement de l'essieu traîné (SA) sans passer au-dessus de la charge maximale admissible de l'au moins un essieu moteur (TA) et sans passer au-dessous de la charge minimale admissible de l'essieu traîné (SA), **caractérisé par** un capteur de pression (S2, S4 ; S3, S5) relié à l'unité de commande et de régulation électronique (7) au niveau de chacun des soufflets de support (2, 4 ; 3, 5) de l'au moins un essieu moteur (TA) et de l'essieu traîné (SA), ainsi que par une vanne électromagnétique 3/2 voies (10) qui est disposée conjointement avec les vannes de commutation (16, 19, 22, 25) dans un bloc de vannes (9) dont l'entrée (11) est reliée à une source d'air comprimé (14) et la première sortie (12) est reliée à un dispositif de purge (15), et la deuxième sortie (13) est reliée aux entrées (17, 20, 23, 26) de quatre vannes électromagnétiques 2/2 voies (16, 19, 22, 25) dont les sorties (18, 21) d'une première et d'une deuxième vanne électromagnétique 2/2 voies (16, 19) sont reliées respectivement à un premier soufflet de support (2) et à un deuxième soufflet de support (4) de l'au moins un essieu moteur (TA) et les sorties (24, 27) d'une troisième et d'une quatrième vanne électromagnétique 2/2 voies (22, 25) sont reliées respectivement à un troisième soufflet de support (3) et à un quatrième soufflet de support (5) de l'essieu traîné (SA).

2. Système de suspension pneumatique selon la revendication 1, **caractérisé en ce que** l'unité de commande et de régulation électronique (7) est adaptée pour soulager l'essieu traîné (SA) et charger l'au moins un essieu moteur (TA) dans le mode de régulation appelé « traction optimale », par commutation d'abord de la vanne électromagnétique 3/2 voies (10) en configuration de passage de l'air comprimé de la première à la quatrième vanne électromagnétique 2/2 voies (16, 19, 22, 25) au dispositif de purge (15) et en même temps par commutation des troisième et quatrième vannes électromagnétiques 2/2 voies (22, 25) de l'essieu traîné (SA) en configuration de passage, tandis que la première et la deuxième vanne électromagnétique 2/2 voies (16, 19) de l'au moins un essieu moteur (TA) sont maintenues dans leur position de blocage pour purger les soufflets de support (3, 5) de l'essieu traîné (SA) à une pression résiduelle, puis pour commuter à nouveau les troisième et quatrième vannes électromagnétiques 2/2 voies (22, 25) de l'essieu traîné (SA) dans leur position de blocage, puis pour commuter à nouveau la vanne électromagnétique 3/2 voies (10) en configuration de passage de l'air comprimé de la source d'air comprimé (14) aux première à quatrième vannes électromagnétiques 2/2 voies (16, 19 ; 22, 25) et tandis que la première et la deuxième vanne électromagnétique 2/2 voies (16, 19) de l'au moins un essieu moteur (TA) sont commutées en configuration de passage pour réguler la pression d'air dans les deux premiers soufflets de support (2, 4) de l'au moins un essieu moteur (TA) de manière à ne pas passer au-dessus de la charge maximale admissible de l'au moins un essieu moteur (TA) et au-dessous de la charge minimale admissible de l'essieu traîné (SA).

3. Système de suspension pneumatique selon l'une des revendications 1 et 2, **caractérisé en ce que** l'unité électronique de commande et de régulation (7) est adaptée pour :
- surveiller en permanence l'au moins un essieu moteur (TA) relativement au passage au-dessus de la charge admissible sur la base des pressions actuelles de soufflets de support,
- retourner automatiquement du mode de régulation appelé « traction optimale » au mode de régulation appelé « régulation du rapport de pressions » en cas de passage au-dessus de la charge admissible de l'au moins un essieu moteur (TA), et
- commander la charge de l'essieu traîné (SA) ainsi que le déplacement de charge sur l'essieu traîné (SA) et le respect de la charge admissible de l'au moins un essieu moteur (TA).

4. Système de suspension pneumatique selon l'une des revendications 1 à 3, **caractérisé en ce que** l'unité de manœuvre (8) est adaptée pour transmettre une instruction de commande appelée « soulager l'essieu traîné » entrée par le conducteur du véhicule lors d'une marche à vide, à l'unité de commande et de régulation électronique (7), et **en ce que** l'unité de commande et de régulation électronique (7) est adaptée pour commander les vannes électromagnétiques 2/2 voies (16, 19, 22, 25) du bloc de vannes (9) afin d'exécuter cette instruction de commutation.

5. Système de suspension pneumatique selon l'une des revendications 1 à 4, **caractérisé en ce que** l'unité de commande et de régulation électronique (7) est adaptée pour déterminer, sur la base des pressions actuelles de soufflets de support, s'il y a une marche à vide, et pour commander les vannes 2/2 voies (16, 19, 22, 25) du bloc de vannes (9) afin d'exécuter cette instruction de commutation.
